# EUROPEAN PATENT SPECIFICATION

(11) **EP 4 261 020 B1**
(45) Date of publication and mention of the grant of the patent: **19.08.2026**
(21) Application number: 23152433.1
(22) Date of filing: 19.01.2023
(51) Int. Cl.: B29C 65/48, B29C 65/50, B29C 65/18, B29L 31/30

(54) **COMPOSITE MATERIAL FUSION METHOD**
VERFAHREN ZUR FUSION VON VERBUNDWERKSTOFFEN
PROCÉDÉ DE FUSION DE MATÉRIAU COMPOSITE

(30) Priority: 15.04.2022 JP 2022067676
(43) Date of publication of application: 18.10.2023
(73) Proprietor: Mitsubishi Heavy Industries, Ltd., Tokyo 100-8332 (JP)
(72) Inventor: IWANAGA, Tomoya, Chiyoda-ku, Tokyo 100-8332 (JP); SUGETA, Kiyoshi, Chiyoda-ku, Tokyo 100-8332 (JP)
(74) Representative: Hoffmann Eitle

(56) References cited:
- WO-A1-2021/199287
- US-A1- 2013 287 481
- US-B2- 9 829 068

## Description

### BACKGROUND

### 1. TECHNICAL FIELD

The present disclosure relates to a composite material fusion method.

### 2. DESCRIPTION OF RELATED ART

Aircraft components such as a fuselage or a main wing of an aircraft may use a composite material such as Carbon Fiber Reinforced Thermo Plastics (CFRTP). A known technique is to fuse and thus join components formed of such a thermoplastic composite material with each other (as in, for example, Japanese Patent No. 6990343). To fuse composite materials with each other, surfaces thereof (fusion interfaces) to be fused are attached to each other, and in this state, the composite materials are heated above the melting point of resin contained in the composite materials to melt the fusion interfaces of the composite material. In the state where the fusion interfaces are melted, the composite materials are pressed so that a pressure is applied to the fusion interfaces, and thereby the composite materials are fused with each other.

Japanese Patent No. 6990343 discloses a method for welding mainly at least two components, in particular, two rigid components containing a thermoplastic material and having respective surfaces to be fused.

Japanese Patent No. 6990343 is an example of the related art.

Examples of methods for fusing composite material components with each other include a method for applying machine processing to a fusion surface of each composite material into a tapered shape and fusing the machine processed surfaces with each other (that is, a taper splice joint). In this method, it is not possible to apply taper processing to the end of a fusion surface because of limited machine processing accuracy, and therefore a space between the composite materials at the end is undesirably formed when the fusion surfaces of the composite materials are attached to each other. Once the space is formed, an insufficient pressure may be applied to portions facing the space of the composite materials. When it is not possible to apply a sufficient pressure, such portions will remain as unpressed portions. The unpressed portions cause waviness of fibers in the melted resin, and this may cause an internal defect (such as wrinkle or delamination). Occurrence of an internal defect may reduce the strength of a component after fused. Note that such a problem may arise not only in the case of the taper splice joint but also in a case where the space is formed between the composite materials.

Further, in fusion of thermoplastic composite materials, fusion strength is ensured by resin bonding. A non-machine processed surface of the composite material is in a state where fibers are covered with the resin. Thus, when non-machine processed surfaces are fused, fusion strength is ensured, because sufficient resin is present. In contrast, a machine processed surface of the composite material is in a state where fibers are exposed and resin is insufficient, because the machine processing has been applied thereto. Thus, when machine processed surfaces are fused, resin may be insufficient, and sufficient fusion strength may not be obtained. Accordingly, a method for fusing machine processed surfaces with each other may reduce strength of a component after fused. Note that such a problem may arise not only in the case of the taper splice joint but also in a case where any one of the fusion surfaces is a machine processed surface.
Further related art may be found in US 9829068B2 which describes a seamless end connection for conveyor belts, in US 20130287481A1 which describes a method for thermoplastic welding and welded composite structures and in WO 2021/199287 A1 which describes a method of joining fibre reinforced thermoplastic members by providing a resin film therebetween and then heating and pressurising the members in a superposed state.

### BRIEF SUMMARY

The present disclosure has been made in view of such circumstances, and an object is to provide a composite material fusion method that can improve strength of a component after fused.

To achieve the above object, the composite material fusion method of the present disclosure is the one as defined in the appended claims.

According to the present disclosure, the strength of a component after fused can be improved.

### BRIEF DESCRIPTION OF THE SEVERAL VIEWS OF THE DRAWINGS

Fig. 1 is a diagram illustrating a composite material fusion method according to an embodiment of the present disclosure, which is a longitudinal sectional view of a first composite material and a second composite material in a state where a resin film is interposed therebetween.
Fig. 2 is an enlarged view of a main portion (portion II) of Fig. 1.
Fig. 3 is a graph illustrating an effect of improving fusion strength in the composite material fusion method according to the embodiment of the present disclosure.
Fig. 4 is a perspective view illustrating a component in which a spacer is fused to a skin by using the composite material fusion method according to the embodiment of the present disclosure.
Fig. 5 is a diagram viewed from the arrow direction of the V-V line of Fig. 4.

### DETAILED DESCRIPTION

One embodiment of a composite material fusion method according to the present disclosure will be described below with reference to the drawings.

The fusion method according to the present embodiment is used to fuse members with each other that are formed of a composite material used as a material for manufacturing a stringer, a spar, a frame, a rib, and the like that are aircraft components forming an aircraft structure. An example of the composite material (a first composite material 10 and a second composite material 20) to be fused may be Carbon Fiber Reinforced Thermo Plastics (CFRTP) of compounded thermoplastic resin and fibers. Specifically, the composite material may be a laminated body of a plurality of laminated fiber reinforced sheets having fibers impregnated with resin.

In the present embodiment, an example of fusing the first composite material 10 and the second composite material 20 with each other will be described.

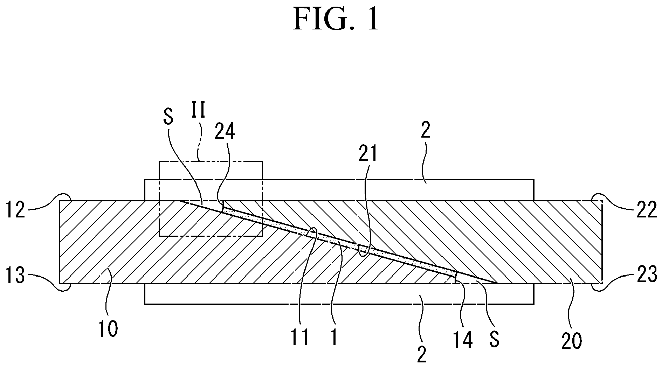

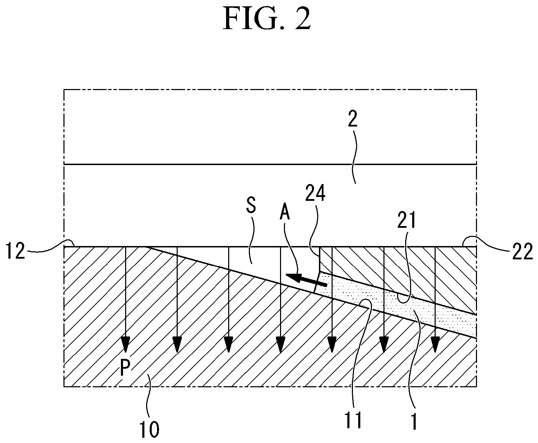

First, the shapes of the first composite material 10 and the second composite material 20 and the arrangement of a resin film 1 will be described with reference to Fig. 1 and Fig. 2. Note that, in Fig. 1 and Fig. 2, the resin film 1 is illustrated thicker than the actual resin film 1 for emphasis. Further, in Fig. 1 and Fig. 2, a space S is illustrated larger than the actual space S for emphasis.

As illustrated in Fig. 1, the first composite material 10 and the second composite material 20 have the same shape and are arranged to be point symmetrical. The first composite material 10 and the second composite material 20 are formed by cutting a flat plate-like laminated body by using a cutting device.

The first composite material 10 has a tapered first fusion surface (a machine processed surface) 11. The first composite material 10 has two plane surfaces connected via the first fusion surface 11. In the following description, out of the two plane surfaces, a surface on the upper side of a drawing sheet is referred to as an upper surface 12, and a surface on the lower side of the drawing sheet is referred to as a lower surface 13. The first fusion surface 11 is formed to be inclined with respect to the upper surface 12 and the lower surface 13.

The second composite material 20 has a tapered second fusion surface 21. The second composite material 20 has two plane surfaces connected via the second fusion surface 21. In the following description, out of the two plane surfaces, a surface on the upper side of the drawing sheet is referred to as an upper surface 22, and a surface on the lower side of the drawing sheet is referred to as a lower surface 23. The second fusion surface 21 is formed to be inclined with respect to the upper surface 22 and the lower surface 23.

The first fusion surface 11 and the second fusion surface 21 are formed by cutting a flat plate-like laminated body, as described above. In such a way, machine processing is applied to the first fusion surface 11 of the first composite material 10 and the second fusion surface 21 of the second composite material 20. In the following description, a surface applied with machine processing is referred to as "machine processed surface". The machine processing is processing (for example, cutting or milling) using a machine. Specifically, an example of the machine processing may be processing of cutting off a workpiece (in the present embodiment, the laminated body), processing of milling a workpiece, or the like by a blade, a water jet, ultrasonic waves, or the like. Further, the machine processed surface is a surface on which machine processing is performed, so that fibers are more exposed than other surfaces. In the present embodiment, the first fusion surface 11 and the second fusion surface 21 are machine processed surfaces.

The taper processing on the first fusion surface 11 does not reach one end (the lower end in the present embodiment) because of limited machine processing accuracy. An end plane surface 14 substantially orthogonal to the lower surface 13 is formed on one end of the first fusion surface 11. The first fusion surface 11 and the lower surface 13 are connected via the end plane surface 14.

As illustrated in Fig. 2, the taper processing on the second fusion surface 21 does not reach one end (the upper end in the present embodiment) because of limited machine processing accuracy. An end plane surface 24 substantially orthogonal to the upper surface 22 is formed on one end of the second fusion surface 21. The second fusion surface 21 and the upper surface 22 are connected via the end plane surface 24.

As illustrated in Fig. 1, when fused, the first composite material 10 and the second composite material 20 are arranged so that the first fusion surface 11 and the second fusion surface 21 are in contact with each other (in detail, in contact with each other via the resin film 1 described later). At this time, as illustrated in Fig. 1 and Fig. 2, the space S is formed between the first composite material 10 and the second composite material 20. In detail, the space S is formed between the first fusion surface 11 of the first composite material 10 and the end plane surface 24 of the second composite material 20. Further, the space S is formed between the second fusion surface 21 of the second composite material 20 and the end plane surface 14 of the first composite material 10. The space S is substantially triangular in the longitudinal cross section. The space S is formed to be recessed from the upper surface 12 of the first composite material 10 and the upper surface 22 of the second composite material 20. Further, the space S is formed to be recessed from the lower surface 13 of the first composite material 10 and the lower surface 23 of the second composite material 20.

When the first composite material 10 and the second composite material 20 are fused with each other, the resin film 1 is provided between the first fusion surface 11 and the second fusion surface 21.

The resin film 1 is formed of a thermoplastic resin. The resin film 1 is formed of poly(aryl ether ketone) (PAEK), poly(ether ether ketone) (PEEK), or the like. Note that the resin film 1 is formed of the same resin as the resin contained in the first composite material 10 and the second composite material 20.

The thickness of the resin film 1 is greater than or equal to 50 µm and less than or equal to 250 µm. Further, the resin film 1 may be formed of a single film or may be formed of multiple films. When multiple films are provided, the total thickness of the multiple resin films 1 is greater than or equal to 50 µm and less than or equal to 250 µm.

When the first composite material 10 and the second composite material 20 are fused with each other, the resin film 1 covers the overall region of the first fusion surface 11 and the second fusion surface 21 in the depth direction of the drawing sheet of Fig. 1. In the present embodiment, the resin film 1 is not arranged in the space S. The resin film 1 covers a region adjacent to a region facing the space S in the first fusion surface 11 and the second fusion surface 21. Note that the resin film 1 may be arranged in the space S; that is, the resin film 1 may cover a region facing the space S.

The resin film 1 faces the space S. In detail, the end face of the resin film 1 faces the space S.

Next, the fusion method or the like according to the present embodiment will be described.

First, the first composite material 10 and the second composite material 20 are manufactured by cutting a flat plate-like laminated body by using a cutting machine so that the flat plate-like laminated body is inclined with respect to a plate surface. Accordingly, the first fusion surface 11 and the second fusion surface 21 that are the cut surfaces become machine processed surfaces.

Next, as described above, the first composite material 10 and the second composite material 20 are arranged so that the first fusion surface 11 and the second fusion surface 21 are in contact with each other via the resin film 1. In other words, the resin film 1 is provided between the first fusion surface 11 and the second fusion surface 21 (in a resin film installation step). Accordingly, the resin film 1 is interposed between the first fusion surface 11 and the second fusion surface 21. At this time, two spaces S are formed between the first composite material 10 and the second composite material 20.

Next, a pair of heaters 2 are arranged so as to interpose the first composite material 10 and the second composite material 20. In detail, one of the heaters 2 is provided to be in contact with the upper surface 12 of the first composite material 10 and the upper surface 22 of the second composite material 20. Further, the other heater 2 is provided to be in contact with the lower surface 13 of the first composite material 10 and the lower surface 23 of the second composite material 20.

At this time, the pair of heaters 2 are arranged so that the first fusion surface 11 and the second fusion surface 21 are located between the pair of heaters 2.

Next, the temperature of the heater 2 is elevated, thereby heating the first composite material 10 and the second composite material 20 with the resin film 1 being provided between the first fusion surface 11 of the first composite material 10 and the second fusion surface 21 of the second composite material 20 (in a heating step). In detail, the first composite material 10 and the second composite material 20 are heated above the melting point of the resin contained in the first composite material 10 and the second composite material 20. Accordingly, the resin contained in the first composite material 10 and the second composite material 20 is melted. At this time, the resin film 1 is also heated via the first composite material 10 and the second composite material 20 and thus melted.

Next, the first composite material 10 and the second composite material 20 with the resin film 1 being provided between the first fusion surface 11 of the first composite material 10 and the second fusion surface 21 of the second composite material 20 are pressed to be held by the pair of heaters 2 (in a pressing step).

In the heating step and the pressing step, the melted resin film 1 flows into the space S as indicated by the arrow A of Fig. 2. Accordingly, the space S is filled with the melted resin film 1. Thus, in the pressing step, the pressure is applied even to the region facing the space S via the filled resin.

The temperature of the heater 2 is reduced in a pressed state to cool the first composite material 10 and the second composite material 20. Accordingly, the first composite material 10 and the second composite material 20 are solidified, and the first fusion surface 11 of the first composite material 10 and the second fusion surface 21 of the second composite material 20 are fused with each other.

In such a way, in the present embodiment, the first composite material 10 and the second composite material 20 are joined by the taper splice joint.

According to the present embodiment, the following advantageous effects are achieved.

In fusion of thermoplastic composite materials, fusion strength is ensured by resin bonding. The non-machine processed surface of the composite material is in a state where fibers are covered with resin. Thus, in fusion of the non-machine processed surfaces, fusion strength is ensured, because sufficient resin is present. In contrast, the machine processed surface of the composite material is in a state where fibers are exposed and resin is insufficient, because the machine processing has been applied thereto. Thus, in fusion of the machine processed surface, resin may be insufficient, and sufficient strength may not be obtained.

In the present embodiment, in a resin film installation step, the thermoplastic resin film 1 is provided to the machine processed surface (first fusion surface 11) of the first composite material 10. Accordingly, the resin film 1 is melted by heat transferred via the first composite material 10 in the heating step. Accordingly, resin is further supplied to the machine processed surface of the first composite material 10. Therefore, the fusion strength can be improved compared to the case where the resin film 1 is not provided. Thus, the strength of the component after fused can be improved.

In the present embodiment, the second fusion surface 21 of the second composite material 20 is also a machine processed surface. Accordingly, the resin film 1 is installed between the machine processed surface of the first composite material 10 and the machine processed surface of the second composite material 20. Therefore, the melted resin film 1 enables the resin to be further supplied to both the machine processed surface of the first composite material 10 and the machine processed surface of the second composite material 20. Therefore, the fusion strength can be improved even when machine processed surfaces where fusion strength is likely to decrease are fused with each other. Thus, the strength of the component after fused can be improved.

When a space is formed between the first composite material 10 and the second composite material 20, a portion facing the space S in the first composite material 10 and the second composite material 20 may be insufficiently pressed in the pressing step. When it is not possible to apply a sufficient pressure in the pressing step, waviness of fibers may occur in the melted resin in the first composite material 10 and the second composite material 20.

In the present embodiment, the resin film 1 is installed so as to face the space S formed between the first composite material 10 and the second composite material 20. This causes the resin film 1 melted in the heating step to flow into the space S. Accordingly, the space S is filled with resin. Therefore, in the pressing step, it is possible to preferably apply a pressure to the surface facing the space S via the filled resin. This can reduce a defect (waviness of fibers or the like) of the composite materials due to insufficient pressurization and improve the strength of the component after fused.

Further, in a state where the space S is not filled with resin, a step part is formed in a connection portion between the first fusion surface 11 and the end plane surface 14 of the first composite material 10. Further, a step part is formed in a connection portion between the second fusion surface 21 and the end plane surface 24 of the second composite material 20. The presence of such step parts may cause the stress peak at the step parts, which may lead to a reduction in fusion strength.

In the present embodiment, the space S is filled with resin in the heating step and the pressing step, and thus no step part is present in the first fusion surface 11 of the first composite material 10 and the second fusion surface 21 of the second composite material 20. Accordingly, the stress peak at the step part can be decreased. Therefore, a reduction in strength can be controlled.

When the resin film 1 is not provided between the fusion surfaces, the fusion strength is low, and thus a high pressure is required as the pressing force in the pressing step in order to obtain desired fusion strength. This may increase the facility cost.

In contrast, in the present embodiment, the resin film 1 is provided between the fusion surfaces, and thus sufficient fusion strength can be obtained even at a relatively low pressure. Therefore, an increase in the facility cost can be controlled.

Further, in the present embodiment, the resin contained in the first composite material 10 and the second composite material 20 and the resin of the resin film 1 are the same. Accordingly, the melted resin film 1 and the first composite material 10 and the second composite material 20 are integrated. This enables more preferable fusion between the first composite material 10 and the second composite material 20.

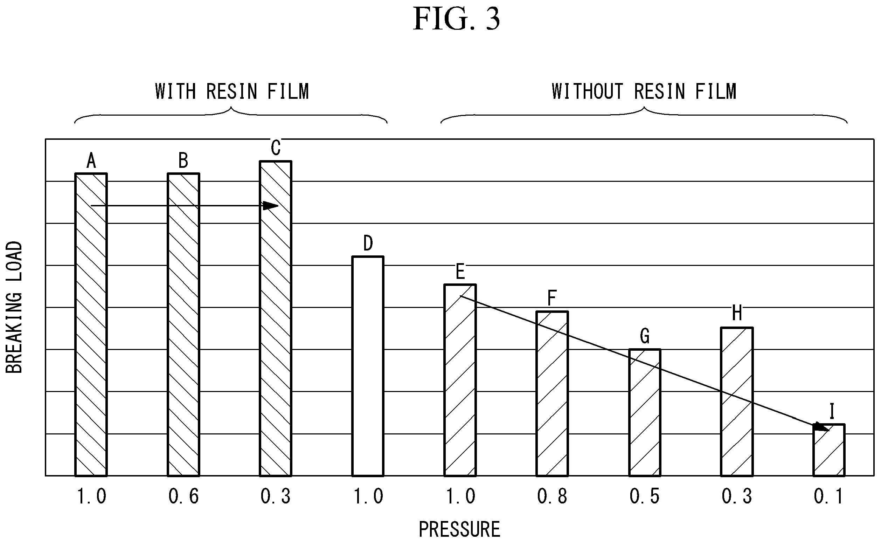

The effect of improving the fusion strength or the like described above will be described in detail with reference to Fig. 3. The vertical axis of Fig. 3 represents a breaking load, and the horizontal axis represents a pressure applied to the first composite material 10 and the second composite material 20 in the pressing step. The pressure on the horizontal axis represents the pressure at a ratio when the reference pressure is defined as 1.0.

Further, bars A to D of the graph of Fig. 3 represent cases where the resin film 1 is provided between the first composite material 10 and the second composite material 20. Note that, as with the above description, A to C represent cases where the resin film 1 is provided on substantially the overall surfaces of the first fusion surface 11 and the second fusion surface 21, and D represents a case where the resin film 1 is provided on only both the ends of the first fusion surface 11 and the second fusion surface 21 (that is, only the region in a predetermined range adjacent to the space S). Further, bars E to I of the graph represent cases where the resin film 1 is not provided between the first composite material 10 and the second composite material 20.

As can be seen from Fig. 3, the breaking loads in the cases where the resin film 1 is provided between the first composite material 10 and the second composite material 20 (bars A to D of the graph) are greater than the breaking loads in the cases where the resin film 1 is not provided (bars E to I of the graph) at every pressure. Accordingly, it can be understood that the fusion strength is improved by providing the resin film 1.

Further, the breaking load in a case where pressurization is performed at a pressure of 1.0 (bar A of the graph) and the breaking load in a case where pressurization is performed at a pressure of 0.3 (bar C of the graph) are not significantly different from each other. Accordingly, it can be understood that, when the resin film 1 is provided, the breaking load does not significantly change even when the pressing force is reduced in the pressing step. Thus, sufficient fusion strength can be obtained even when the pressing force is reduced in the pressing step, and it can be understood that no high-pressure facility is required to be provided, which can control an increase in the facility cost.

In contrast, it can be understood that, when the resin film 1 is not provided, a reduction in the pressure tends to reduce the breaking load, and in such a case, a high pressure is required as the pressing force in the pressing step in order to obtain desired fusion strength, thereby increasing the facility cost.

Further, as can be seen from comparison between a case (bar A of the graph) where the resin film 1 is provided on substantially the overall surfaces of the first fusion surface 11 and the second fusion surface 21 and pressurization is performed at a pressure of 1.0, a case (bar D of the graph) where the resin film 1 is provided at only both the ends of the first fusion surface 11 and the second fusion surface 21 and pressurization is performed at a pressure of 1.0, and a case (bar E of the graph) where the resin film 1 is not provided and pressurization is performed at a pressure of 1.0, a difference in breaking loads between bar A and bar D of the graph is greater than a difference in breaking loads between bar D and bar E of the graph. Accordingly, it can be understood that an effect of further supplying resin to a machine processed surface via the resin film 1 has a greater effect on improvement of fusion strength than an effect of filling the space S with resin.

Note that the present disclosure is not limited to the embodiments described above and can be changed as appropriate within the scope of the claims.

For example, in the above embodiment, both the first fusion surface 11 of the first composite material 10 and the second fusion surface 21 of the second composite material 20 are machine processed surfaces applied with machine processing, but the present disclosure is not limited thereto. For example, the fusion method according to the present disclosure may be applied to a case where a machine processed surface and a surface not applied with machine processing (hereinafter, referred to as "non-machine processed surface") are fused with each other.

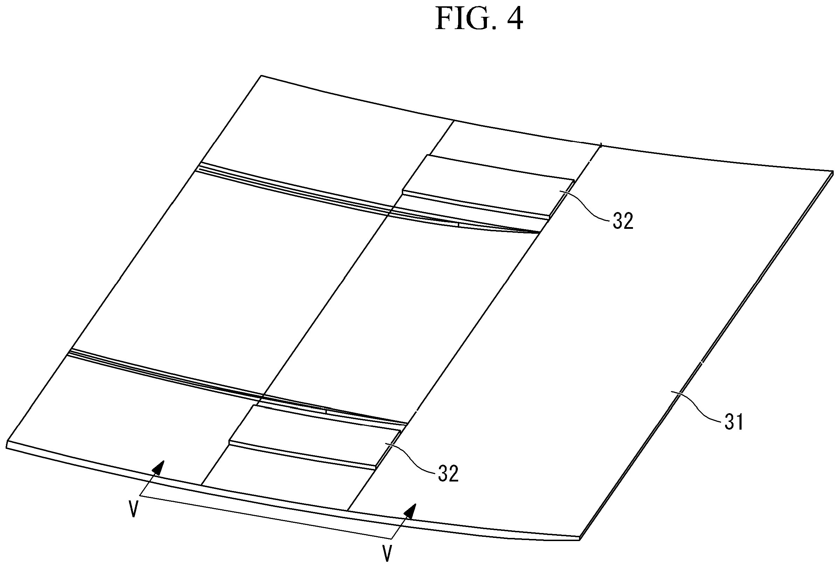

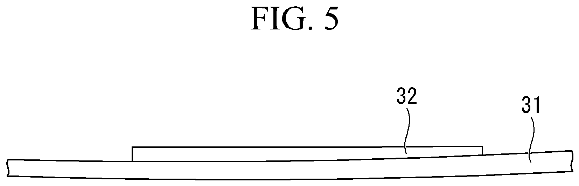

As illustrated in Fig. 4 and Fig. 5, an example of fusing a machine processed surface and a non-machine processed surface may be a case where a skin 31 formed of a composite material is fused with a spacer 32, for example. As illustrated in Fig. 4, the spacer 32 is fixed to the surface of the skin 31 used for an aircraft. The skin 31 is manufactured by laminating prepreg impregnated with resin, for example. Thus, machine processing has not been applied to the skin 31. Thus, the surface of the skin 31 is a non-machine processed surface. In contrast, as illustrated in Fig. 5, the plate thickness of the skin 31 is not uniform. Thus, the taper processing is applied to the fusion surface (the lower surface of Fig. 5) of the spacer 32 so that the spacer 32 corresponds to the plate thickness of the skin 31. Thus, the fusion surface of the spacer 32 is a non-machine processed surface. Therefore, when the spacer 32 is fused with the surface of the skin 31, the machine processed surface and the non-machine processed surface are fused. Even in such a case, the resin film 1 is provided between the machine processed surface and the non-machine processed surface when fused, thereby resin can be further supplied to the surface of the machine processed surface, and the effect of improving fusion strength described above is thus achieved.

Further, in the above embodiment, an example of fusing fusion surfaces applied with the taper processing is described, but the present disclosure is not limited thereto. When a space is formed between composite materials when fused, it is possible to reduce a defect (waviness of fibers or the like) of the composite materials due to insufficient pressurization by applying the fusion method according to the present disclosure. For example, an example in which a space is formed between composite materials when fused may be a case where the fusion surface has a recess or a case where a composite material having an L-shaped cross section is fused, for example. When a composite material having an L-shaped cross section is fused, a space is formed between the outer portion of a curved portion and the composite material of a counterpart portion.

Further, in the above embodiment, the method for applying heat and a pressure as a method for fusing the first composite material 10 and the second composite material 20 with each other is described. The fusion method according to the present disclosure may be applied to resistance fusion.

A composite material fusion method according to the embodiments described above will be understood as follows, for example.

A composite material fusion method according to the first aspect of the present disclosure that is not claimed is a composite material fusion method for fusing a first composite material (10), which is a composite material made of a thermoplastic resin and fibers, and a second composite material (20), which is a composite material made of a thermoplastic resin and fibers, with each other, and the composite material fusion method includes: a resin film installation step of providing a thermoplastic resin film (1) between a machine processed surface (11) of the first composite material to be fused and a fusion surface (21) of the second composite material to be fused, the machine processed surface being applied with machine processing; a heating step of heating the first composite material and the second composite material in a state where the resin film is provided between the machine processed surface of the first composite material and the fusion surface of the second composite
material; and a pressing step of pressing the first composite material and/or the second composite material in a state where the resin film is provided between the machine processed surface of the first composite material and the fusion surface of the second composite material.

In fusion of thermoplastic composite materials, fusion strength is ensured by resin bonding. A non-machine processed surface of the composite material is in a state where fibers are covered with resin. Thus, in fusion of the non-machine processed surface, fusion strength is ensured, because sufficient resin is present. In contrast, the machine processed surface of the composite material is in a state where fibers are exposed and resin is insufficient, because the machine processing has been applied thereto. Thus, when the machine processed surfaces are fused with each other, resin may be insufficient, and sufficient fusion strength may not be obtained.

In the above configuration, in the resin film installation step, the thermoplastic resin film is provided to the machine processed surface of the first composite material. Accordingly, the resin film is melted by heat transferred via the first composite material in the heating step. Accordingly, resin is further supplied to the machine processed surface of the first composite material.
Therefore, the fusion strength can be improved compared to the case where no resin film is provided. Thus, the strength of the component after fused can be improved.

In a composite material fusion method according to the second aspect of the present disclosure that is not claimed, the fusion surface of the second composite material is a machine processed surface applied with machine processing in the above first aspect.

In the above configuration, the fusion surface of the second composite material is also a machine processed surface. Accordingly, the resin film is installed between the machine processed surface of the first composite material and the machine
processed surface of the second composite material.
Therefore, the melted resin film enables the resin to be further supplied to both the machine processed surface of the first composite material and the machine processed surface of the second composite material. Therefore, the fusion strength can be improved even when machine processed surfaces where fusion strength is likely to decrease are fused with each other. Thus, the strength of the component after fused can be improved.

A composite material fusion method according to the third aspect of the present disclosure is defined in appended claim 1.

When a space is formed between the first composite material and the second composite material, a portion facing the space in the first composite material and the second composite material may be insufficiently pressed in the pressing step. When it is not possible to apply a sufficient pressure in the pressing step, waviness of fibers may occur in
the melted resin in the first composite material and the second composite material.

In the above configuration, the resin film is installed so as to face the space formed between the first composite material and the second composite material. This causes the resin film melted in the heating step to flow into the space. Accordingly, the space is filled with resin. Therefore, in the pressing step, it is possible to preferably apply a pressure to a surface facing the space via the filled resin. Thus, a defect (waviness of fibers or the like) of the composite materials due to insufficient pressurization can be reduced. This can improve the strength of the component after fused.

In a composite material fusion method according to the fourth aspect of the present disclosure, a resin in the first composite material and a resin in the resin film are the same resin in any one of the first aspect to the third aspect described above.

In the above configuration, the melted resin film and the first composite material are optionally integrated. This enables more preferable fusion between the first composite material and the second composite material.

### [List of Reference Symbols]

- 1: resin film
- 2: heater
- 10: first composite material
- 11: first fusion surface
- 12: upper surface
- 13: lower surface
- 14: end plane surface
- 20: second composite material
- 21: second fusion surface
- 22: upper surface
- 23: lower surface
- 24: end plane surface
- 31: skin
- 32: spacer
- S: space

## Claims

1. A composite material fusion method for fusing a first composite material (10) and a second composite material (20) with each other in order to manufacture an aircraft component for forming an aircraft, the first composite material (10) being a composite material made of a thermoplastic resin and fibers and including an upper surface (12), a lower surface (13), and a first fusion surface (11) inclined with respect to the upper surface (12) and the lower surface (13), the second composite material (20) being a composite material made of a thermoplastic resin and fibers and including an upper surface (22), a lower surface (23), and a second fusion surface (21) inclined with respect to the upper surface (22) and the lower surface (23), the composite material fusion method comprising:
a resin film installation step of providing a resin film (1) between the first fusion surface (11) of the first composite material (10) to be fused and the second fusion (21) surface of the second composite material (20) to be fused;
a heating step of heating the first composite material (10) and the second composite material (20) in a state where the resin film (1) is provided between the first fusion surface (11) of the first composite material (10) and the second fusion surface (21) of the second composite material (20); and
a pressing step of pressing the first composite material (10) and the second composite material (20) in a state where the resin film (1) is provided between the first fusion surface (11) of the first composite material (10) and the second fusion surface (21) of the second composite material (20),
wherein in the resin film installation step, the resin film (1) is installed so as to face a space (S) formed between the first fusion surface (11) of the first composite material (10) and an end plane surface (24), wherein the end plane surface (24) is substantially orthogonal to the upper surface (22) and is formed on one end of the second fusion surface (21), and the second fusion surface (21) and the upper surface (22) are connected via the end plane surface (24),
wherein in the heating step, the first composite material (10) and the second composite material (20) are heated by a pair of heaters (2) being arranged so as to interpose the first composite material (10) and the second composite material (20), the pair of heaters (2) including a first heater being in contact with the upper surface (12) of the first composite material (10) and the upper surface (22) of the second composite material (20), and a second heater being in contact with the lower surface (13) of the first composite material (10) and the lower surface (23) of the second composite material (20), and the resin film (1) being melted flows into the space (S), and
wherein in the pressing step, the first composite material (10) and the second composite material (20) are pressed by the pair of heaters (2).

2. The composite material fusion method according to claim 1, wherein a resin in the first composite material (10) and a resin in the resin film (1) are the same resin.

## Patentansprüche

1. Verfahren zur Fusion von Verbundmaterialien zum Fügen eines ersten Verbundmaterials (10) und eines zweiten Verbundmaterials (20) miteinander, um ein Flugzeugbauteil zum Bilden eines Flugzeugs herzustellen, wobei das erste Verbundmaterial (10) ein Verbundmaterial ist, das aus thermoplastischem Harz und Fasern gebildet ist und eine obere Oberfläche (12), eine untere Oberfläche (13) und eine erste Fügefläche (11) einschließt, die in Bezug auf die obere Oberfläche (12) und die untere Oberfläche (13) geneigt ist, wobei das zweite Verbundmaterial (20) ein Verbundmaterial ist, das aus thermoplastischem Harz und Fasern gebildet ist und eine obere Oberfläche (22), eine untere Oberfläche (23) und eine zweite Fügefläche (21) einschließt, die in Bezug auf die obere Oberfläche (22) und die untere Oberfläche (23) geneigt ist, wobei das Verfahren zur Fusion von Verbundmaterialien umfasst:
einen Harzfilm-Anordnungsschritt des Anordnens eines Harzfilms (1) zwischen der ersten Fügefläche (11) des zu fügenden ersten Verbundmaterials (10) und der zweiten Fügefläche (21) des zu fügenden zweiten Verbundmaterials (20);
einen Erwärmungsschritt des Erwärmens des ersten Verbundmaterials (10) und des zweiten Verbundmaterials (20) in einem Zustand, in dem der Harzfilm (1) zwischen der ersten Fügefläche (11) des ersten Verbundmaterials (10) und der zweiten Fügefläche (21) des zweiten Verbundmaterials (20) angeordnet ist; und
einen Pressschritt des Pressens des ersten Verbundmaterials (10) und des zweiten Verbundmaterials (20) in einem Zustand, in dem der Harzfilm (1) zwischen der ersten Fügefläche (11) des ersten Verbundmaterials (10) und der zweiten Fügefläche (21) des zweiten Verbundmaterials (20) angeordnet ist,
wobei in dem Harzfilm-Anordnungsschritt der Harzfilm (1) so angeordnet ist, dass er einem Spalt (S) gegenüberliegt, der zwischen der ersten Fügefläche (11) des ersten Verbundmaterials (10) und einer Endstirnfläche (24) gebildet ist, wobei die Endstirnfläche (24) zu der oberen Oberfläche (22) im Wesentlichen orthogonal ist und an einem Ende der zweiten Fügefläche (21) gebildet ist, und die zweite Fügefläche (21) und die obere Oberfläche (22) über die Endstirnfläche (24) verbunden sind,
wobei in dem Erwärmungsschritt das erste Verbundmaterial (10) und das zweite Verbundmaterial (20) durch ein Paar von Heizelementen (2) erwärmt werden, das so angeordnet ist, dass das erste Verbundmaterial (10) und das zweite Verbundmaterial (20) dazwischen angeordnet sind, wobei das Paar von Heizelementen (2) ein erstes Heizelement einschließt, das mit der oberen Oberfläche (12) des ersten Verbundmaterials (10) und der oberen Oberfläche (22) des zweiten Verbundmaterials (20) in Kontakt ist, und ein zweites Heizelement, das mit der unteren Oberfläche (13) des ersten Verbundmaterials (10) und der unteren Oberfläche (23) des zweiten Verbundmaterials (20) in Kontakt ist, und der Harzfilm (1), der geschmolzen wird, in den Spalt (S) fließt, und
wobei in dem Pressschritt das erste Verbundmaterial (10) und das zweite Verbundmaterial (20) durch das Paar von Heizelementen (2) gepresst werden.

2. Verfahren zur Fusion von Verbundmaterialien nach Anspruch 1, wobei ein Harz in dem ersten Verbundmaterial (10) und ein Harz in dem Harzfilm (1) dasselbe Harz sind.

## Revendications

1. Procédé de fusion de matériau composite pour fusionner un premier matériau composite (10) et un deuxième matériau composite (20) l'un avec l'autre afin de fabriquer un composant d'aéronef pour former un aéronef, le premier matériau composite (10) étant un matériau composite constitué d'une résine thermoplastique et de fibres et incluant une surface supérieure (12), une surface inférieure (13) et une première surface de fusion (11) inclinée par rapport à la surface supérieure (12) et à la surface inférieure (13), le deuxième matériau composite (20) étant un matériau composite constitué d'une résine thermoplastique et de fibres et incluant une surface supérieure (22), une surface inférieure (23) et une deuxième surface de fusion (21) inclinée par rapport à la surface supérieure (22) et à la surface inférieure (23), le procédé de fusion de matériau composite comprenant :
une étape d'installation du film de résine consistant à fournir un film de résine (1) entre la première surface de fusion (11) du premier matériau composite (10) à fusionner et la deuxième surface de fusion (21) du deuxième matériau composite (20) à fusionner ;
une étape de chauffage consistant à chauffer le premier matériau composite (10) et le deuxième matériau composite (20) dans un état dans lequel le film de résine (1) est fourni entre la première surface de fusion (11) du premier matériau composite (10) et la deuxième surface de fusion (21) du deuxième matériau composite (20) ; et
une étape de pressage consistant à presser le premier matériau composite (10) et le deuxième matériau composite (20) dans un état dans lequel le film de résine (1) est fourni entre la première surface de fusion (11) du premier matériau composite (10) et la deuxième surface de fusion (21) du deuxième matériau composite (20),
dans lequel, dans l'étape d'installation du film de résine, le film de résine (1) est installé de manière à faire face à un espace (S) formé entre la première surface de fusion (11) du premier matériau composite (10) et une surface plane d'extrémité (24), dans lequel la surface plane d'extrémité (24) est sensiblement orthogonale à la surface supérieure (22) et est formée sur une extrémité de la deuxième surface de fusion (21), et la deuxième surface de fusion (21) et la surface supérieure (22) sont reliées via la surface plane d'extrémité (24),
dans lequel, dans l'étape de chauffage, le premier matériau composite (10) et le deuxième matériau composite (20) sont chauffés par une paire de dispositifs de chauffage (2) étant agencée de manière à interposer le premier matériau composite (10) et le deuxième matériau composite (20), la paire de dispositifs de chauffage (2) incluant un premier dispositif de chauffage étant en contact avec la surface supérieure (12) du premier matériau composite (10) et la surface supérieure (22) du deuxième matériau composite (20), et un deuxième dispositif de chauffage étant en contact avec la surface inférieure (13) du premier matériau composite (10) et la surface inférieure (23) du deuxième matériau composite (20), et le film de résine (1) étant fondu s'écoule dans l'espace (S), et
dans lequel, dans l'étape de pressage, le premier matériau composite (10) et le deuxième matériau composite (20) sont pressés par la paire de dispositifs de chauffage (2).

2. Procédé de fusion de matériau composite selon la revendication 1, dans lequel une résine dans le premier matériau composite (10) et une résine dans le film de résine (1) sont la même résine.
